(19) Europäisches Patentamt
European Patent Office
Office européen des brevets

(11) **EP 4 699 883 A1**

(12) **EUROPÄISCHE PATENTANMELDUNG**

(43) Veröffentlichungstag:
**25.02.2026 Patentblatt 2026/09**

(21) Anmeldenummer: **24195815.6**

(22) Anmeldetag: **22.08.2024**

(51) Internationale Patentklassifikation (IPC):
**B60W 40/09** (2012.01) **B60W 50/00** (2006.01)

(52) Gemeinsame Patentklassifikation (CPC):
**B60W 40/09; B60W 50/0097; B60W 50/0098;**
B60W 2050/0013; B60W 2050/0029;
B60W 2050/0088; B60W 2520/105;
B60W 2520/125; B60W 2540/30; B60W 2556/10;
B60W 2556/50

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **MAGNA Automotive Europe GmbH
1120 Wien (AT)**

(72) Erfinder:
• **DORFER, Matthias
4501 Neuhofen a.d. Krems (AT)**

• **GROSSBICHLER, Martin
4421 Aschbach/Steyr (AT)**
• **HOEFER, Christoph
4483 Hargelsberg (AT)**
• **TKACHENKO, Pavlo
4040 Linz (AT)**

(74) Vertreter: **Zangger, Bernd
Magna International Europe GmbH
Patentabteilung
Liebenauer Hauptstraße 317
8041 Graz (AT)**

(54) **VERFAHREN ZUM STEUERN EINES ZUMINDEST TEILWEISE ASSISTIERT FAHRENDEN FAHRZEUGS**

(57) Ein Verfahren zum Steuern eines zumindest teilweise assistiert fahrenden Fahrzeugs (V), wobei das Verfahren ein Planer-Modul (PM) verwendet, das dazu eingerichtet ist, eine numerische Optimierung durchzuführen, wobei Kontextinformationen (C), wie zum Beispiel Routeninformationen, Straßenverlaufsinformationen und/oder Umgebungsinformationen, als Eingangsparameter der Optimierung verwendet werden, wobei die Optimierung zur Erreichung von Zielen, wie geringer Fahrzeit und geringem Energieverbrauch eingerichtet ist, und wobei eine Ausgabe des Planer-Moduls als Eingangsparameter für eine ADAS-Steuerung (A) zur realen Bewegung des Fahrzeugs (V) verwendet wird, wobei ein personalisiertes Fahrerparameterset (D) für einen bestimmten Fahrer als Randbedingung der Optimierung im Planer-Modul (PM) verwendet wird, wobei das personalisierte Fahrerparameterset (D) den persön-lichen Fahrstil des bestimmten Fahrers abbildet und eine Steuereinheit die dazu ausgebildet ist, ein solches Verfahren auszuführen.

Fig. 1

Processed by Luminess, 75001 PARIS (FR)

# EP 4 699 883 A1

**Beschreibung**

**Gebiet der Erfindung**

Die vorliegende Erfindung betrifft ein Verfahren zum Steuern eines zumindest teilweise assistiert fahrenden Fahrzeugs und eine Steuereinheit für ein zumindest teilweise assistiert fahrendes Fahrzeug.

**Stand der Technik**

Zumindest teilweise assistiert fahrende Fahrzeuge sind auch als ADAS-Fahrzeuge (Advanced Driving Assistant Systems) oder automatisierte Fahrzeuge bekannt. Bei derartigen Fahrzeugen kann ein Assistenzsystem des Kraftfahrzeugs beispielsweise in die Querregelung und/oder in die Längsregelung des Kraftfahrzeugs eingreifen. Zu diesen Fahrzeugen gehören auch vollautomatisierte bzw. autonome Kraftfahrzeuge, bei welchen eine Steuerung des Kraftfahrzeugs vollautonom durchgeführt werden kann.

Die Steuerung derartiger Fahrzeuge erfolgt - zusätzlich oder alternativ zur Steuerung durch einen Fahrer - durch eine ADAS-Steuerung, die geeignete Fahrtrajektorien in Längs- und/oder Querrichtung und somit geeignete Beschleunigs- und/oder Lenkungsvorgänge ermittelt, um vorgegebene Fahrziele zu erreichen und dabei Bedingungen, wie das Vermeiden von Kollisionen mit anderen Verkehrsteilnehmern einzuhalten.

Eine Personalisierung einer derartigen ADAS-Steuerung ist nur insofern bekannt, als solche Fahrzeuge eine Reihe von vordefinierten Fahrmodi aufweisen können, die der Fahrer auswählen und manuell einstellen kann. Mit einem derartigen Mechanismus gibt das Fahrzeug dem Fahrer eine Möglichkeit, das Verhalten der automatisierten Fahrfunktionen (ADAS) zu beeinflussen.

Der menschliche Fahrer muss dazu jedoch zunächst eine Intuition für die verfügbaren Konfigurationsoptionen, nämlich Fahrmodi, entwickeln. Dies ist ein langsames, iteratives Verfahren (Versuch und Irrtum), um das gewünschte Fahrerlebnis zu erreichen.

Darüber hinaus deckt die begrenzte Anzahl der derzeit verfügbaren Optionen möglicherweise nicht die persönlichen Präferenzen des Fahrers ab, das heißt das zugrunde liegende Personalisierungsmodell, um ein gewünschtes Fahrerlebnis zu erreichen, ist technisch sehr begrenzt.

Eine technische Herausforderung stellt auch das Berücksichtigen des Kontexts - d.h. der spezifischen Eigenschaften der aktuellen und auch in naher Zukunft kommenden Fahrsituation und der Fahrzeugumgebung - in diesen fixen Fahrmodi dar.

Die Berücksichtigung des Kontexts in heutigen ADAS-Systemen ist statisch und auf einige wenige Signale beschränkt, so dass sich die Modi nicht automatisch an die neuesten Informationen während der Fahrt anpassen können. Üblicherweise erfolgt keine vorausschauende Planung einer bevorstehenden Fahrt unter Berücksichtigung breiterer Kontextinformationen wie z. B. betreffend vorausliegende Kurven, Steigungen, Stra-ßenzustand, Verkehr, Tageszeit. ADAS-Systeme sind nicht auf die Optimierung von Zeit- oder Energieeffizienz ausgerichtet und in ihrer Personalisierungsfähigkeit eingeschränkt.

**Zusammenfassung der Erfindung**

Es ist eine Aufgabe der Erfindung, ein Verfahren zum Steuern eines zumindest teilweise assistiert fahrenden Fahrzeugs in dieser Hinsicht zu verbessern und insbesondere ein Verfahren anzugeben, dass eine vorausschauende Berücksichtigung von Optimierungs-Zielen und dabei eine hohe Personalisierbarkeit ermöglicht. Eine weitere Aufgabe der Erfindung ist es, eine Steuereinheit für ein zumindest teilweise assistiert fahrendes Fahrzeug anzugeben, die ein derart vorausschauendes und personalisiertes Fahren ermöglicht.

Die Lösung der Aufgabe erfolgt durch ein Verfahren zum Steuern eines zumindest teilweise assistiert fahrenden Fahrzeugs, wobei das Verfahren ein Planer-Modul verwendet, das dazu eingerichtet ist, eine numerische Optimierung durchzuführen, wobei Kontextinformationen, wie zum Beispiel Routeninformationen, Straßenverlaufsinformationen und/oder Umgebungsinformationen, als Eingangsparameter der Optimierung verwendet werden, wobei die Optimierung zur Erreichung von Zielen, wie geringer Fahrzeit und/oder geringem Energieverbrauch eingerichtet ist, und wobei eine Ausgabe des Planer-Moduls als Eingangsparameter für eine ADAS-Steuerung zur realen Bewegung des Fahrzeugs verwendet wird, wobei ein personalisiertes Fahrerparameterset für einen bestimmten Fahrer als Randbedingung der Optimierung im Planer-Modul verwendet wird, wobei das personalisierte Fahrerparameterset den persönlichen Fahrstiel des bestimmten Fahrers abbildet.

Erfindungsgemäß wird ein Steuerverfahren für ein zumindest teilweise assistiert fahrendes Fahrzeug angegeben, dass Kontextinformationen zur Erreichung von langfristigen Zielen, wie geringe Fahrzeit und/oder geringer Energieverbrauch, mittels einer Optimierung in einem Planer-Modul der Steuerung berücksichtigt. Dieses Planer-Modul ist im Weiteren derart konzipiert, dass neben der Erreichung der zuvor genannten Ziele zusätzliche Randbedingungen in Form eines mathematischen Fahrermodells, welches durch das personalisierbare Fahrerparameterset parametriert wird, berücksichtigt werden können. Erfindungsgemäß bildet das personalisierte Fahrerparameterset den persönlichen Fahrstiel des bestimmten Fahrers ab. Die Abbildung kann durch ein mathematisches Modell erfolgen, das mehrere Parameter umfasst. Das Fahrerparameterset kann ein Fahrerparameterset für ein Modell von Fahrerkomfortbedingungen sein.

Somit wird ein System für eine ADAS-Personalisierung angegeben, dass die mathematische Abstraktion von Randbedingungen für eine Fahrerpräferenz, insbesondere für den gewünschten Komfort des Fahrers enthält, die in einem Planungsmodul verwendet wird, um eine vorausschauende Planung der Fahrt für einen gegebenen Kontext und unter Berücksichtigung zusätzlicher Optimierungs-Ziele - wie zum Beispiel Energie und Zeit - zu bestimmen.

Die Erfindung beinhaltet dadurch die Möglichkeit, dass der Planer durch ein benutzerdatengesteuertes Lernmodul und/oder durch einen kontextbewussten Online-Algorithmus kontinuierlich angepasst und adaptiert werden kann.

Es kann somit ein Modell der Fahrerpräferenz als Randbedingung für einen ADAS-Planer und eine lernbasierte Personalisierung verwendet werden. Das Planungsmodul kann zur Ermittlung eines vorausschauenden Fahrplans für einen gegebenen Kontext unter Berücksichtigung von Optimierungs-Zielen, wie Energie und/oder Zeit und von Einschränkungen bzw. Nebenbedingungen in Bezug auf den gewünschten Fahrerkomfort eines bestimmten Fahrers eingerichtet sein. Der Fahrerwunsch, insbesondere der gewünschte Fahrerkomfort, wird nicht lediglich aus einer Klasse von wenigen vorgegebenen Möglichkeiten (wie z.B. Fahrmodi) gewählt, sondern es erfolgt eine individuelle Abbildung der Fahrweise eines bestimmten Fahrers in einem mathematischen Modell, parametriert durch das Fahrerparameterset.

Ein benutzerdatengesteuertes Lernmodul kann zur Ableitung der personalisierten Parametrisierung des Planungsmoduls verwendet werden. Es kann eine kontextabhängige kontinuierliche Online-Aktualisierung der Planer-Parametrisierung erfolgen.

Das Optimierungsproblem des Planer-Moduls wird bevorzugt wegdiskret definiert. Zeit und Energie können als "Kosten" in der Optimierung verwendet werden.

Eine erfindungsgemäße Lösung kann die Kombination eines modellbasierten Verfahrens zum Steuern eines zumindest teilweise assistiert fahrenden Fahrzeugs mit einem datenbasierten maschinellen Lernansatz, um den manuellen Kalibrierungsaufwand bei gleichzeitig erhöhter Qualität der Personalisierung zu reduzieren, beinhalten. Das Lernmodul ist datenbasiert und offen für künftige Erweiterungen auf einen breiteren Kontext als den heute verwendeten, zum Beispiel durch die Einbeziehung künftiger ADAS Erfassungssysteme.

Weiterbildungen der Erfindung sind in den abhängigen Ansprüchen, der Beschreibung sowie den beigefügten Zeichnungen angegeben.

Der persönliche Fahrstiel des bestimmten Fahrers wird bevorzugt durch laterale und longitudinale Beschleunigungsgrenzen im personalisierten Fahrerparameterset des bestimmten Fahrers abgebildet. Besonders bevorzugt beschreibt das Fahrerparameterset ein zumindest zweidimensionales Feld von lateralen und longitudinalen Beschleunigungsgrenzen des bestimmten Fahrers.

Vorzugsweise wird das personalisierte Fahrerparameterset aus einer voraufgezeichneten Fahrdatenmenge, in der zumindest eine Fahrt des bestimmten Fahrers aufgezeichnet wurde, durch Modell-Anpassung oder durch Lernen bestimmt.

Bevorzugt wird das personalisierte Fahrerparameterset für das Modell der Fahrerkomfortbedingungen aus der voraufgezeichneten Fahrdatenmenge dadurch durch Modell-Anpassung bestimmt, dass ein Optimierungsverfahren für verschiedene Fahrerparametersets berechnet, wie nahe eine aus diesen Fahrerparametersets jeweils berechnete Fahrdatenmenge der aufgezeichneten Fahrdatenmenge liegt. In einem benutzerdatengesteuerten Lernmodul kann das personalisierte Fahrerparameterset aus einer aufgezeichneten Fahrdatenmenge, in der zumindest eine Fahrt eines bestimmten Fahrers aufgezeichnet wurde, durch maschinelles Lernen oder künstlicher Intelligenz bestimmt werden.

Gemäß einer Ausführungsform, wird das personalisierte Fahrerparameterset aus der voraufgezeichneten Fahrdatenmenge dadurch durch Lernen bestimmt, dass in einem ersten Schritt das Planer-Modul dazu verwendet wird, für verschiedene Strecken, mit verschiedenen Kontextinformationen und verschiedenen Modellen von personalisierten Fahrerparametersets, eine Trainings-Datensatz zu produzieren, dass in einem zweiten Schritt ein Planer-Invertierungs-Modell dazu trainiert wird, aus der Trainings-Datensatz die zugrundeliegenden personalisierten Fahrerparametersets zu bestimmen und dass in einem dritten Schritt, das Planer-Invertierungs-Modell dazu verwendet wird, aus der voraufgezeichneten Fahrdatenmenge das zugrundeliegende personalisierte Fahrerparameterset zu bestimmen.

In einer erfindungsgemäßen Realisierung kann das Bestimmen des Fahrerparameterset aus einer aufgezeichneten Fahrdatenmenge somit in drei Schritten erfolgen. Im ersten Schritt wird offline ein Trainingsdatensatz erstellt, in dem das Planer-Modul verwendet wird, um für verschiedene Strecken, Kontextinformationen und Fahrerparameter einen Datensatz an Planungsergebnissen zu erstellen. Im zweiten Schritt wird offline ein Planer-Invertierungs-Modell erlernt, welches aus dem Kontext und Planungsergebnis auf das zugehörige Fahrerparameterset projiziert. Dies kann durch maschinelles Lernen oder künstlicher Intelligenz erfolgen. Im dritten Schritt wird dieses Planer-Invertierungs-Modell Online auf den aktuellen Fahrdatensatz während der Fahrt angewendet, um das dazugehörige passende Fahrerparameterset zu bestimmen. Dieses online adaptierte Fahrerparameterset ermöglich dem Planer-Modul in der ADAS Funktion eine personalisierte Fahrweise im assistierten oder autonomen Betrieb zu ermöglich.

Vorzugsweise umfassen die Kontextinformationen, die als Eingangsparameter der Optimierung verwendet werden: Routeninformationen, Straßenverlaufsinformationen, wie Kurven, Steigungen, Geschwindigkeitsbegrenzungen, Verkehrsschilder, und/oder Umgebungsinformationen, wie Wetterinformationen, Temperaturinformationen, Fahrbahnzustandsinformationen, Verkehrsinformationen und/oder Sensorinformationen, wie Informationen über Fahrzeuge in der Umgebung und Straßenzustand in der Umgebung.

Die Aufgabe der Erfindung wird auch gelöst durch eine Steuereinheit für ein zumindest teilweise assistiert fahrendes Fahrzeug, wobei die Steuereinheit dazu ausgebildet ist, ein Verfahren wie zuvor beschrieben auszuführen.

**Kurzbeschreibung der Zeichnungen**

Die Erfindung wird im Folgenden beispielhaft unter Bezugnahme auf die Zeichnungen beschrieben.

Fig. 1   ist eine schematische Darstellung eines erfindungsgemäßen Verfahrens.

Fig. 2   ist eine schematische Darstellung von Fahrer-Bedingungen für ein erfindungsgemäßes Verfahren, bei einem ersten Kontext und Fahrer-Parametersatz.

Fig. 3   ist eine schematische Darstellung von Fahrer-Bedingungen für ein erfindungsgemäßes Verfahren, bei einem zweiten Kontext und Fahrer-Parametersatz.

Fig. 4   ist eine schematische Darstellung eines ersten Verfah-rens zum Bestimmen des personalisierten Fahrerparametersets (D) aus einer voraufgezeichneten Fahrdatenmenge (RD) in einem erfindungsgemäßen Verfahren.

Fig. 5   ist eine schematische Darstellung eines ersten Schrittes eines zweiten Verfahrens zum Bestimmen des personalisierten Fahrerparametersets (D) aus einer voraufgezeichneten Fahrdatenmenge (RD) in einem erfindungsgemäßen Verfahren.

Fig. 6   ist eine schematische Darstellung eines zweiten Schrittes eines zweiten Verfahrens zum Bestimmen des personalisierten Fahrerparametersets (D) aus einer voraufgezeichneten Fahrdatenmenge (RD) in einem erfindungsgemäßen Verfahren.

Fig. 7   ist eine schematische Darstellung eines dritten Schrittes eines zweiten Verfahrens zum Bestimmen des personalisierten Fahrerparametersets (D) aus einer voraufgezeichneten Fahrdatenmenge (RD) in einem erfindungsgemäßen Verfahren.

**Detaillierte Beschreibung der Erfindung**

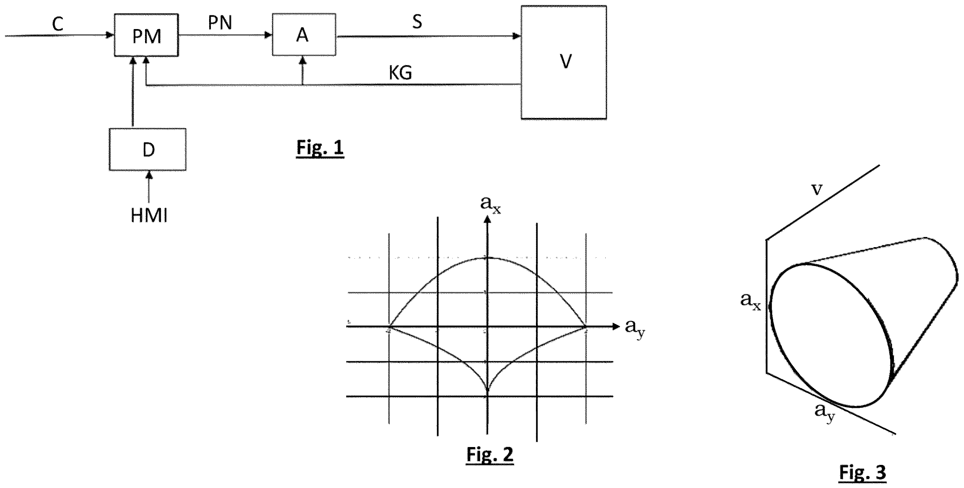

In der Fig. 1 ist ein erfindungsgemäßes Verfahren zum Steuern eines zumindest teilweise assistiert fahrenden Fahrzeugs V schematisch dargestellt.

Das Verfahren verwendet ein Planer-Modul PM um eine numerische Optimierung durchzuführen, wobei Kontextinformationen C, wie zum Beispiel Routeninformationen, Straßenverlaufsinformationen und/oder Umgebungsinformationen, als Eingangsparameter der Optimierung im Planer-Modul PM verwendet werden. Die Optimierung ist zur Erreichung von Zielen, wie geringer Fahrzeit und geringem Energieverbrauch, eingerichtet. Eine Ausgabe des Planer-Moduls PM, nämlich ein Plan PN, wird als Eingangsparameter für eine unmittelbare ADAS-Steuerung A zur realen Bewegung des Fahrzeugs V verwendet. Die ADAS-Steuerung A erzeugt beispielsweise Beschleunigungs-, Brems- und/oder Lenksignale S für das Fahrzeug V. Vom Fahrzeug V werden Kontext- und Geschwindigkeitsinformationen KG an die ADAS-Steuerung A und das Planer-Modul PM zurückgemeldet.

Erfindungsgemäß wird ein personalisiertes Fahrerparameterset D für einen bestimmten Fahrer als Randbedingung der Optimierung im Planer-Modul PM als weiterer Eingangsparameter der Optimierung im Planer-Modul PM verwendet.

Das Planer-Modul PM nimmt eine Reihe von Kontextinformationen C auf, die vielfältige Signale enthalten können, wie zum Beispiel:

- Informationen über die bevorstehende Straße, z.B. Krümmung, Steigung, Infrastruktur, gesetzliche Grenzen, Verkehrszeichen, usw.,
- Informationen über die geplante makroskopische Route,
- Informationen über die Umgebung wie Wetter, Temperatur, Straßenzustand, usw.

In einigen Ausführungsformen werden auch Verkehrs- und Umgebungsinformationen einbezogen, die von eventuell vorhandenen ADAS-Sensoren wie Kameras, Radar usw. erfasst werden.

Ein Beispiel für einen Kontextsatz C könnte zum Beispiel sein,

$$C = \{v, a_x, a_y, c, slope, v_{lim}, \mu, \theta, ...\},$$

und könnte somit unter anderem Fahrzeuggeschwindigkeit v, Fahrzeuglängs- und -querbeschleunigung $\{a_x, a_y\}$, Straßenkrümmung c, Stra-ßenneigung slope, zulässige Höchstgeschwindigkeit $v_{lim}$, Straßenreibung $\mu$, und Straßenneigung $\theta$ beinhalten.

Anhand dieser Eingaben kann eine ganzheitliche Planung der Fahrzeugbewegung im Geschwindigkeits- und Wegbereich entlang der geplanten Route erfolgen. Die Planung liefert als Ergebnis, also als Plan PN, nicht nur einen Geschwindigkeits- und Pfadplan, sondern kann auch davon abgeleitete Signale wie Beschleunigung, Drehmoment und Lenkwinkel enthalten.

Die Planung erfolgt durch numerische Optimierung, um das Erreichen bestimmter Ziele zu gewährleisten und den gewünschten Fahrkomfort und die Vorlieben des Fahrers zu berücksichtigen, indem geeignete mathematische Beschränkungen definiert werden. Die Ziele sind unter anderem die Minimierung der Fahrzeit und des Energieverbrauchs. Der Fahrer kann diese Ziele nach seinen Bedürfnissen abwägen, indem er zum Beispiel Schieberegler einer Mensch-Maschine-Schnittstelle HMI verändert und/oder verschiedene Fahrmodi im Fahrzeug aktiviert, die die entsprechenden Parameter in der Optimierung verändern. Das numerische Optimierungsproblem kann wie folgt formuliert werden:

$$\min_{u,x} \sum_{k=0}^{N_S} J\big(F_1\big(x_{k(s)}, u_{k(s)}\big), F_2\big(x_{k(s)}, u_{k(s)}, P\big)$$
$$s.t. \quad x_{k+1(s)} = f\big(x_{k(s)}, u_{k(s)}, V, C\big)$$
$$\underline{U} \leq u_{k(s)} < \overline{U}$$
$$\underline{X} \leq x_{k(s)} < \overline{X}$$
$$\Gamma_{\min}(x_{k(s)}, u_{k(s)}, D, C) \leq \Gamma(x_{k(s)}, u_{k(s)}, C) \leq \Gamma_{\max}(x_{k(s)}, u_{k(s)}, D, C)$$
$$...$$

Dabei ist:

| | |
|---|---|
| $J(.)$ | allgemeine Kostenfunktion |
| $F_1(.)$ | Energie-Kosten |
| $F_2(.)$ | Reisezeit-Kosten |
| $f(.)$ | Fahrzeug-Modell |
| $\Gamma_{\min}, \Gamma, \Gamma_{\max}$ | Modell der Fahrerkomfortbedingungen |
| $V$ | Fahrzeugparameter, z.B. Masse, Roll- und Widerstandsbeiwert, Frontfläche: $V = \{m, c_r, c_d, A\}$, |
| $D$ | Fahrerparameterset (Fahrerkomfortbedingungen), |
| $P$ | Planer Hyperparameter z. B., $P = \{\omega_{(\varepsilon)}\}$ mit $\omega_{(\varepsilon)}$ als Ausgleichsfaktor für die Personalisierung, |
| $C$ | Kontext-Eingabe-Set |
| $\underline{U}, \overline{U}, \underline{X}, \overline{X}$ | untere und obere Schranken für die Optimierungsvariablen. |

Der Fahrerkomfort wird durch die Einbeziehung einer mathematischen Beschreibung

$$\Gamma_{\min}(x_{k(s)}, u_{k(s)}, D, C) \leq \Gamma(x_{k(s)}, u_{k(s)}, C) \leq \Gamma_{\max}(x_{k(s)}, u_{k(s)}, D, C)$$

des persönlichen Fahrstils gewährleistet, die direkt als Nebenbedingung im Optimierungsproblem verwendet werden kann. Der Fahrerparametersatz D beschreibt dabei die individuellen Einstellungen, die für jeden Fahrer unterschiedlich sein können. Der spezielle Ansatz zum Erlernen und Abstimmen dieser Parameter, zusammen mit dem Planer-Hyperparametersatz P, wird im Folgenden beschrieben.

Das Ergebnis des Planers wird in einem zugrundeliegenden ADAS/AD-Controller A verwendet, der sicherstellt, dass das Fahrzeug der geplanten Bewegung in einem automatisierten Modus folgt. Auf diese Weise wird die geplante Bewegung, die vom Fahrer vollständig personalisiert und angepasst wurde, im realen ADAS/AD-Fahrzeug umgesetzt.

Modell der Fahrerkomfortbeschränkungen

Ein wesentliches Element der Erfindung sind die Fahrerkomfortbedingungen, also allgemein das Fahrerparameterset, in einer bestimmten mathematischen Formulierung, die direkt in einem Planungsmodul, nämlich in der Optimierung des Planer-Moduls PM, als Bedingung zur Realisierung verschiedener Fahrstile und ihrer entsprechenden Geschwindigkeits- und Bahntrajektorien verwendet werden kann.

Die Fahrereinschränkungen werden für Quer- und Längsbeschleunigungs-/Verzögerungsgrenzen abgeleitet und im Allgemeinen durch mehrdimensionale geschlossene Formen dargestellt. Mathematisch kann dies wie folgt formuliert werden:

$$\Gamma_{\min}(x_{k(s)}, u_{k(s)}, \mathrm{D}, \mathrm{C}) \leq \Gamma(x_{k(s)}, u_{k(s)}, \mathrm{C}) \leq \Gamma_{\max}(x_{k(s)}, u_{k(s)}, \mathrm{D}, \mathrm{C})$$

Beispiele für die Komfortbedingungen, das Fahrerparameterset D und den Kontext C:

$$D = \{p, q, a_{x,min}, a_{x,max}, a_{y,min}, a_{y,max}\}, \; C = \{v, a_x, a_y, c, slope, v_{lim}, \mu, \theta, ...\}$$

wobei sich die Werte in D auf die mathematische Formulierung der Bedingungen beziehen.

Würde man beispielsweise keine Abhängigkeiten vom Kontext (C = {}) berücksichtigen und die Fahrer-Bedingungen $\Gamma_{\min}$ und $\Gamma_{\max}$ durch (halbe) Astroiden- und (halbe) Kreisgleichungen im Beschleunigungsbereich und mit dem folgenden Fahrer-Parametersatz definieren,

$$D = \{p := 0.5, q := 2, a_{x,min} := 2, a_{x,max} := 2, a_{y,min} := 2, a_{y,max} := 2\}$$

könnten die Fahrer-Bedingungen wie folgt aussehen

$$-2 \cdot \left(1 - \left|\frac{a_y}{2}\right|^{0.5}\right) \leq a_x \leq 2 \cdot \left(1 - \left|\frac{a_y}{2}\right|^{2}\right)$$

die wie in Fig. 2 gezeigt grafisch dargestellt werden kann.

Für die Kontextmenge, die aus der Geschwindigkeit des Fahrzeugs besteht, C = {v}, und für

$$D = \{p := 2, q := 2, a_{x,min}(v), a_{x,max}(v), a_{y,min}(v), a_{y,max}(v)\}$$

können die Fahrer-Bedingungen aussehen, wie in Fig. 3 dargestellt.

Datengestützte Modell-Anpassung von Fahrerkomfortbedingungen (Constraint Fitting)

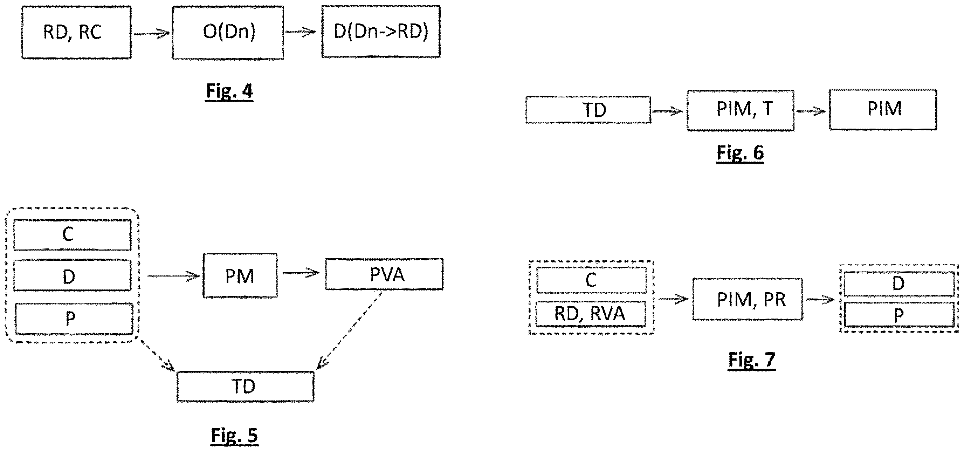

Dieser Abschnitt beschreibt den in Fig. 4 dargestellten Prozess der Modell-Anpassung (Fitting) des mathematischen Modells der Komfortbedingungen des Fahrers

$$\Gamma_{\min/\max}(x_{k(s)}, u_{k(s)}, \mathrm{D}, \mathrm{C})$$

an einen zuvor aufgezeichneten Fahrdatensatz RD, in dem eine Überprüfung eines Kalibrierdatensatzes erfolgt RC, durch die Ermittlung eines geeigneten Fahrerparametersatzes D. Da der Fahrdatensatz RD von einer vollständig von Menschen kontrollierten Kalibrierungsfahrt aufgezeichnet wird und somit implizit die Präferenzen des Fahrers widerspiegelt, betrachten wir diese Phase des Arbeitsablaufs als datengesteuerte Personalisierung.

Der Optimierungsprozess O selbst basiert auf einem mathematischen Optimierungsziel, das misst, wie gut eine gegebene fahrerfreundliche Einschränkung Dn - z. B. die zuvor erwähnte Form im Beschleunigungsbereich, die durch ihre Parametrisierung definiert ist, siehe Fig. 2 und 3 - die aufgezeichneten Datenproben RD darstellen und erklären kann. Angesichts dieses Optimierungsziels führen wir eine numerische Optimierung der Parametrisierung durch, um die Übereinstimmung zwischen dem Modell der Fahrereinschränkung Dn und den aufgezeichneten Datenproben RD zu maximieren.

Da eine mathematische Formulierung des Optimierungsziels bevorzugt vollständig differenzierbar ist, ist sie mit einer Vielzahl von Optimierungsalgorithmen kompatibel, die von einer einfachen Gittersuche bis hin zu auf stochastischem Gradientenabstieg basierenden Optimierern reichen.

Sobald die Optimierungsphase konvergiert, wird die resultierende datengesteuerte Parametrisierung Dn als Konfigurationsinput D für den Planer verwendet.

Lernen und Vorhersage von Fahrerkomfortbeschränkungen

Im Folgenden wird unter Bezugnahme auf die Fig. 5 bis Fig. 7 ein komplementäres System zur Ableitung von Fahrerkomfortbedingungen aus aufgezeichneten Testfahrten beschrieben, die als Geschwindigkeits- und Beschleunigungsdaten vorliegen. Dieses System basiert auf dem Vortraining eines maschinellen Lernmodells.

Schritt 1 (Offline-Schritt): Aufbau eines synthetischen Pre-Training-Datensatzes - siehe Fig. 5

Aus einer Reihe verschiedener Streckenlayouts werden zunächst zufällig Teilstrecken ausgewählt. Für jede dieser Teilstrecken führen wir dann den Planer PM mit ebenfalls zufällig ausgewählten Fahrerparametern D, Kontext C und Planer-Hyperparametern P aus. Das Gesamtergebnis dieses Schritts ist ein vielfältiger Datensatz, der die folgenden Elemente enthält: {(D, C, P, geplante Geschwindigkeit und Beschleunigung)}. Die geplante Geschwindigkeit und Beschleunigung ist in Fig. 5 als VA dargestellt. Der hierdurch bestimmte Datensatz wird als Trainings-Datensatz TD bezeichnet.

Schritt 2 (Offline-Schritt): Training des maschinellen Lernmodells - siehe Fig. 6

Ausgehend von dem in Schritt 1 erstellten Datensatz TD trainieren T (Training) wir ein maschinelles Lernmodell, nämlich ein Planer-Invertierungs-Modell PIM, das bei gegebenem Kontext C und geplanten Geschwindigkeits- und Beschleunigungsdaten VA als Eingabe, die zugrundeliegenden Komfortbedingungen D für den Fahrer sowie die entsprechenden Hyperparameter P des Planers vorhersagt (PR Predict) (siehe Fig. 7).

f(C, geplante Geschwindigkeit und Beschleunigung) -> (D, P)

Es ist also grundsätzlich darauf trainiert, eine Inversion des Planungsmoduls PM vorherzusagen (PM$^{-1}$. oben als f bezeichnet) - in Fig. 7 im Schritt PIM, PR.

Schritt 3 (Online-Schritt): Modellbasierte Personalisierung durch maschinelles Lernen - siehe Fig. 7

Dieser Schritt beschreibt eine feinere Alternative zum oben beschriebenen Constraint-Fitting-Ansatz (Fig. 4). Angesichts des Planer-Inversionsmodells PIM (bzw. f) und der Geschwindigkeits- und Beschleunigungsaufzeichnungen aus einer Kalibrierungs-Testfahrt einschließlich des entsprechenden Kontexts C verwenden wir PIM, um die wahrscheinlichste nicht ableitbare Parametrisierung des Planers (Fahrerparameter D und Planer-Hyperparameter P) vorherzusagen. Da in diesem Fall die Eingabedaten für das Modell nicht das Ergebnis eines synthetischen Datengenerierungsprozesses sind, sondern eine tatsächliche Benutzeraufzeichnung (Fahrer) aus einer Kalibrierungsfahrt, handelt es sich um ein alternatives Personalisierungsverfahren.

**Bezugszeichenliste**

| | |
|---|---|
| A | ADAS-Steuerung |
| $a_{x,max}$, $a_{x,min}$ | Beschleunigungsgrenzen (longitudinal) |
| $a_{y,max}$, $a_{y,min}$ | Beschleunigungsgrenzen (lateral) |
| C | Kontextinformationen |
| D | Fahrerparameterset |
| Dn | verschiedene Fahrerparametersets |
| HMI | Human Machine Interface, Benutzerschnittstelle |
| KG | Kontext- und Geschwindigkeitsinformationen |
| LM | Planer-Invertierungs-Modell |
| O | Optimierungsverfahren |
| P | Planer-Hyperparameter |
| PM | Planer-Modul |
| PN | Plan |
| PR | Vorhersage |
| PVA | Geplante Geschwindigkeit und Beschleunigung |
| RC | Überprüfung eines Kalibrierdatensatzes |

| RD | Fahrdatenmenge |
|---|---|
| RVA | Aufgezeichnete Geschwindigkeit und Beschleunigung |
| S | Beschleunigungs-, Brems- und/oder Lenksignale |
| T | Training |
| TD | Trainings-Datensatz |
| V | Fahrzeug |
| v | Geschwindigkeit |
| Γ | Modell der Fahrerkomfortbedingungen |

**Patentansprüche**

1. Verfahren zum Steuern eines zumindest teilweise assistiert fahrenden Fahrzeugs (V), wobei das Verfahren ein Planer-Modul (PM) verwendet, das dazu eingerichtet ist, eine numerische Optimierung durchzuführen, wobei Kontextinformationen (C), wie zum Beispiel Routeninformationen, Straßenverlaufsinformationen und/oder Umgebungsinformationen, als Eingangsparameter der Optimierung verwendet werden, wobei die Optimierung zur Erreichung von Zielen, wie geringer Fahrzeit und geringem Energieverbrauch eingerichtet ist, und wobei eine Ausgabe des Planer-Moduls (PM) als Eingangsparameter für eine ADAS-Steuerung (A) zur realen Bewegung des Fahrzeugs (V) verwendet wird,
**dadurch gekennzeichnet, dass** ein personalisiertes Fahrerparameterset (D) für einen bestimmten Fahrer als Randbedingung der Optimierung im Planer-Modul (PM) verwendet wird, wobei das personalisierte Fahrerparameterset (D) den persönlichen Fahrstiel des bestimmten Fahrers abbildet.

2. Verfahren nach Anspruch 1,
**dadurch gekennzeichnet, dass** das personalisierte Fahrerparameterset (D) aus einer voraufgezeichneten Fahrdatenmenge (RD), in der zumindest eine Fahrt des bestimmten Fahrers aufgezeichnet wurde, durch Modell-Anpassung oder durch Lernen bestimmt wird.

3. Verfahren nach Anspruch 2,
**dadurch gekennzeichnet, dass** das personalisierte Fahrerparameterset (D) aus der voraufgezeichneten Fahrdatenmenge (RD) dadurch durch Modell-Anpassung bestimmt wird, dass ein Optimierungsverfahren (O) für verschiedene Fahrerparametersets (Dn) berechnet, wie nahe eine aus diesen Fahrerparametersets (Dn) jeweils berechnete Fahrdatenmenge (RD) der aufgezeichneten Fahrdatenmenge (RD) liegt.

4. Verfahren nach Anspruch 2,
**dadurch gekennzeichnet, dass** das personalisierte Fahrerparameterset (D) aus der voraufgezeichneten Fahrdatenmenge (RD) dadurch durch Lernen bestimmt wird, dass in einem ersten Schritt das Planer-Modul (PM) dazu verwendet wird, für verschiedene Strecken, mit verschiedenen Kontextinformationen (C) und verschiedenen Modellen von personalisierten Fahrerparametersets (D), eine Trainings-Datensatz (TD) zu produzieren, dass in einem zweiten Schritt ein Planer-Invertierungs-Modell (PIM) dazu trainiert (T) wird, aus dem Trainings-Datensatz (TD) die zugrundeliegenden personalisierten Fahrerparametersets (D) zu bestimmen und dass in einem dritten Schritt, das Planer-Invertierungs-Modell (PIM) dazu verwendet wird, aus der voraufgezeichneten Fahrdatenmenge (RD) das zugrundeliegende personalisierte Fahrerparameterset (D) zu bestimmen.

5. Verfahren nach zumindest einem der vorhergehenden Ansprüche, **dadurch gekennzeichnet, dass** die Kontextinformationen (C), die als Eingangsparameter der Optimierung verwendet werden, umfassen: Routeninformationen, Straßenverlaufsinformationen, wie Kurven, Steigungen, Geschwindigkeitsbegrenzungen, Verkehrsschilder, und/oder Umgebungsinformationen, wie Wetterinformationen, Temperaturinformationen, Fahrbahnzustandsinformationen, Verkehrsinformationen und/oder Sensorinformationen, wie Informationen über Fahrzeuge in der Umgebung und Straßenzustand in der Umgebung.

6. Verfahren nach zumindest einem der vorhergehenden Ansprüche, **dadurch gekennzeichnet, dass** der persönliche Fahrstiel des bestimmten Fahrers durch laterale und longitudinale Beschleunigungsgrenzen ($a_{x,max}$, $a_{x,min}$, $a_{y,max}$, $a_{y,min}$) im personalisierten Fahrerparameterset (D) des bestimmten Fahrers abgebildet wird.

7. Steuereinheit für ein zumindest teilweise assistiert fahrendes Fahrzeug, wobei die Steuereinheit dazu ausgebildet ist, ein Verfahren nach zumindest einem der vorhergehenden Ansprüche auszuführen.

Fig. 3

Fig. 1

Fig. 2

```
┌──────────┐      ┌──────────┐      ┌──────────────┐
│  RD, RC  │ ───> │  O(Dn)   │ ───> │  D(Dn->RD)   │
└──────────┘      └──────────┘      └──────────────┘
```

**Fig. 4**

```
┌──────────┐      ┌──────────┐      ┌──────────┐
│    TD    │ ───> │  PIM, T  │ ───> │   PIM    │
└──────────┘      └──────────┘      └──────────┘
```

**Fig. 6**

```
┌ ─ ─ ─ ─ ─ ┐
  ┌───────┐
│ │   C   │ │
  └───────┘
│ ┌───────┐ │         ┌──────┐        ┌──────────┐
  │   D   │  ───────> │  PM  │ ─────> │   PVA    │
│ └───────┘ │         └──────┘        └──────────┘
  ┌───────┐                                  ╲
│ │   P   │ │                                 ╲
  └───────┘                                    ╲
└ ─ ─ ─ ─ ─ ┘                                   ╲
        ╲                                        ↓
         ╲              ┌──────────────────┐
          ──────────>   │        TD        │  <────
                        └──────────────────┘
```

**Fig. 5**

```
┌ ─ ─ ─ ─ ─ ─ ┐                                ┌ ─ ─ ─ ─ ─ ┐
 ┌──────────┐                                    ┌───────┐
│ │    C    │ │        ┌──────────┐            │ │   D   │ │
 └──────────┘   ─────> │  PIM, PR │ ─────>       └───────┘
│ ┌──────────┐ │       └──────────┘            │ ┌───────┐ │
 │  RD, RVA │                                    │   P   │
│ └──────────┘ │                               │ └───────┘ │
└ ─ ─ ─ ─ ─ ─ ┘                                └ ─ ─ ─ ─ ─ ┘
```

**Fig. 7**

EP 4 699 883 A1

Europäisches
Patentamt

European
Patent Office

Office européen
des brevets

# EUROPÄISCHER RECHERCHENBERICHT

Nummer der Anmeldung

**EP 24 19 5815**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 205152 A1 (AVL LIST GMBH [AT]) 5. Oktober 2017 (2017-10-05) * Abbildungen 1-7 * * Absätze [0001], [0004], [0015], [0028], [0032], [0034], [0037], [0041], [0044], [0047] - [0049], [0051], [0052], [0054] - [0055] * * Absätze [0069], [0072] - [0074] * * das ganze Dokument *  ----- | 1-7 | INV. B60W40/09 B60W50/00 |
| X | CHU HONGQING ET AL: "Self-Learning Optimal Cruise Control Based on Individual Car-Following Style", IEEE TRANSACTIONS ON INTELLIGENT TRANSPORTATION SYSTEMS, IEEE, PISCATAWAY, NJ, USA, Bd. 22, Nr. 10, 24. März 2020 (2020-03-24) , Seiten 6622-6633, XP011881467, ISSN: 1524-9050, DOI: 10.1109/TITS.2020.2981493 [gefunden am 2021-10-01] * Abschnitte II, III * * das ganze Dokument *  ----- | 1-4,7 | |
| X | FR 3 068 322 A1 (CONTINENTAL AUTOMOTIVE FRANCE [FR]; CONTINENTAL AUTOMOTIVE GMBH [DE]) 4. Januar 2019 (2019-01-04) * Abbildung 1 * * das ganze Dokument *  ----- | 1,2,7 | RECHERCHIERTE SACHGEBIETE (IPC)  B60W |

Der vorliegende Recherchenbericht wurde für alle Patentansprüche erstellt

| Recherchenort | Abschlußdatum der Recherche | Prüfer |
|---|---|---|
| **München** | **4. Februar 2025** | **Dubreuil, Cédric** |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**          EP 24 19 5815

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2025

| Im Recherchenbericht angeführtes Patentdokument | Datum der Veröffentlichung | Mitglied(er) der Patentfamilie | Datum der Veröffentlichung |
|---|---|---|---|
| DE 102016205152 A1 | 05-10-2017 | AT 518489 A2<br>DE 102016205152 A1<br>WO 2017167801 A1 | 15-10-2017<br>05-10-2017<br>05-10-2017 |
| FR 3068322 A1 | 04-01-2019 | KEINE | |

Für nähere Einzelheiten zu diesem Anhang : siehe Amtsblatt des Europäischen Patentamts, Nr.12/82

EPO FORM P0461